# EUROPÄISCHE PATENTSCHRIFT

(11) **EP 2 836 465 B1**
(45) Veröffentlichungstag und Bekanntmachung des Hinweises auf die Patenterteilung: **27.09.2017**
(21) Anmeldenummer: 13715235.1
(22) Anmeldetag: 11.04.2013
(51) Int. Cl.: C02F 1/42, B01J 49/00, C02F 5/00, C02F 1/00, B01D 41/00, B01D 24/46, B01D 24/00, B01D 29/62

(54) **VERFAHREN ZUM BETRIEB EINER WASSERBEHANDLUNGSANLAGE**
METHOD FOR OPERATING A WATER TREATMENT SYSTEM
PROCÉDÉ PERMETTANT DE FAIRE FONCTIONNER UNE INSTALLATION DE TRAITEMENT DE L'EAU

(30) Priorität: 14.04.2012 DE 102012007579
(43) Veröffentlichungstag der Anmeldung: 18.02.2015
(73) Patentinhaber: Judo Wasseraufbereitung GmbH, 71364 Winnenden (DE)
(72) Erfinder: KÜHN, Walter, 71686 Backnang (DE)
(74) Vertreter: Kohler Schmid Möbus Patentanwälte
(86) Internationale Anmeldenummer: PCT/EP2013/057559
(87) Internationale Veröffentlichungsnummer: WO 2013/153149

(56) Entgegenhaltungen:
- EP-A1- 2 345 477
- EP-B1- 1 160 204
- CH-A- 411 792
- DE-A1- 2 339 589
- DE-A1- 3 402 912
- DE-A1- 10 350 884
- US-A- 6 036 866
- US-A1- 2002 195 403
- HORST GLASER ET AL: "Automatisierung von Ionenaustauscher-Anlagen", GALVANOTECHNIK (SAULGAU/WÃ 1/4 RTT.),, Bd. 61, Nr. 7, 15. Juli 1970 (1970-07-15), Seiten 575-579, XP001252488,

## Beschreibung

Die Erfindung betrifft ein Verfahren zum Betrieb einer Wasserbehandlungsanlage mit mehreren parallel betreibbaren, mit je einem Wasserbehandlungselement einer Grundkapazität bestückten Behältern und mit Ventilen mit Ventilöffnungen zur Einstellung von Teilvolumenströmen von zu behandelndem Wasser durch die Behälter, wobei sich jeder Behälter entweder in einem Normalbetrieb oder in einem Regenerationsbetrieb befindet, wobei im Normalbetrieb eines Behälters das zugehörigen Ventil zumindest teilweise geöffnet ist und das Wasserbehandlungselement des Behälters eine Restkapazität aufweist, wobei im Regenerationsbetrieb das Ventil geschlossen ist und der Behälter mit einer Regeneriermittellösung durchströmt wird, wobei sich immer mindestens einer der Behälter im Normalbetrieb befindet, und wobei ein Regeneriervorgang des Wasserbehandlungselements eingeleitet wird, wenn die Restkapazität dieses Wasserbehandlungselements einen vorgegebenen Regenerationsgrenzwert unterschreitet.

Ein solches Verfahren ist bekannt aus EP 1 160 204 B1.

Wasser, welches durch das öffentliche Trinkwassernetz zur Verfügung gestellt wird, enthält verschiedene Härtebildnern, insbesondere Calcium-Ionen und Magnesium-Ionen. Dies kann zu Kalkablagerungen an allen Arten von Oberflächen führen, die dem Wasser ausgesetzt sind.

Mittels Wasserenthärtungsanlagen kann das Wasser enthärtet werden, indem Calcium- und Magnesium-Ionen durch Natrium-Ionen ersetzt werden. Hierfür wird ein mit Natrium-Ionen beladenes Ionentauscherharz verwendet. Das Ionentauscherharz kann jedoch nur eine bestimmte Menge an Calcium- und Magnesium-Ionen aufnehmen. Ist diese Menge erreicht, so erfolgt kein Ionenaustausch mehr, weil die Kapazität des Ionentauscherharzes erschöpft ist. Das Ionentauscherharz muss regeneriert werden. Hierzu wird eine Regeneriermittellösung (Natriumchloridlösung) über das Ionentauscherharz geleitet. Dabei wird das Ionentauscherharz mit Natrium-Ionen beladen.

Wasserenthärtungsanlagen mit zwei oder mehr Behältern mit Ionenaustauscherharz zeichnen sich durch eine höhere Kapazität aus und können selbst während der Regeneration des Ionentauscherharzes einzelner Behälter weiterhin weiches Wasser liefern.

Bei Pendelanlagen (z.B. DE 103 50 884 B4) befindet sich ein Behälter in Betrieb, während der zweite regeneriert wird bzw. sich im Standby-Modus (Wartestellung) befindet. Es ist eine kontinuierliche Versorgung mit Weichwasser möglich. Nachteilig ist, dass der in Wartestellung befindliche Behälter nicht durchströmt wird, was aus hygienischen Gründen nicht optimal ist.

EP 2 345 477 A1 offenbart eine Wasserenthärtungsanlage mit zwei Behandlungsbehältern, die eine unterschiedliche Kapazität (Größe) aufweisen. Bei hohen Durchflüssen durch die Wasserenthärtungsanlage wird das zu behandelnde Wasser komplett durch den größeren Behälter geleitet, während geringe Volumenströme vollständig durch den kleineren Behälter fließen. Nachteilig ist hier, dass es zu Härtedurchbrüchen kommen kann, wenn viel Weichwasser entnommen wird, während der größere Behälter regeneriert wird. Alternativ sind daher weitere Behälter vorgesehen, was die Anlage komplexer macht und verteuert. Weiterhin nachteilig ist, dass die einzelnen Behälter zeitweise gar nicht durchströmt werden, was aus hygienischen Gründen nicht wünschenswert ist.

In EP 1 160 204 B1 wird eine Wasserenthärtungsanlage beschrieben, bei der mehrere Behälter parallel betrieben werden (Parallelanlage). Der Gesamtwasserfluss teilt sich hier auf die einzelnen Behälter auf, so dass alle Behälter gleichzeitig durchströmt werden. Wenn ein Behälter zu einem bestimmten Grad erschöpft ist, wird dieser regeneriert. Während dieser Zeit versorgen die restlichen Behälter die Verbraucher mit weichem Wasser. Ist in dieser Zeit die Wasserentnahme sehr hoch, so besteht jedoch die Gefahr, dass die Kapazität der Anlage nicht ausreicht und ein Härtedurchbruch auftritt.

Bei den bekannten Parallelverfahren werden alle Behälter gleichmäßig durchströmt und weisen somit den gleichen Erschöpfungszustand bzw. dieselbe Restkapazität auf. Um sicher zu stellen, dass die am Netz verbleibenden Behälter auch für höhere Volumenströme genügend Restkapazität aufweisen und kein Härtedurchbruch stattfindet, müssen die einzelnen Behälter sehr früh regeneriert werden. Eine frühzeitige Regeneration erhöht jedoch den Verbrauch an Regeneriermittellösung.

Darüber hinaus ist es bekannt, eine Parallelanlage zeitversetzt zu betreiben, indem die verschiedenen Behälter zu verschiedenen Zeiten in Betrieb genommen werden. Bei einem solchen zeitversetzen Betrieb zweier Behälter steht bei Regeneration des eines Behälters maximal die Hälfte der Kapazität des anderen Behälters zur Verfügung, was bei kleiner Grundkapazität und großer Wasserentnahmen während der Regeneration nicht ausreichend sein kann und dann zu einem Härtedurchbruch führt. Die Kapazität der Behälter muss daher bei solchen Anlagen entsprechend groß ausgelegt sein, was die Anlage verteuert.

Die oben beschriebenen Probleme treten in ähnlicher Weise auch bei anderen Wasserbehandlungsanlagen, wie z.B. Filteranlagen, auf.

Im Rahmen dieser Anmeldung soll unter "Kapazität eines Behälters" die Kapazität des in diesem Behälter befindlichen Wasserbehandlungselements (z.B. Ionentauscherharz, Filter) verstanden werden. Analog hierzu ist unter "Erschöpfung/Regeneration eines Behälters" die Erschöpfung/Regeneration des Wasserbehandlungselements im entsprechenden Behälter zu verstehen. Ein Behälter ist erschöpft, wenn die Restkapazität des Wasserbehandlungselements kleiner oder gleich dem Regenerationsgrenzwert ist.

### Aufgabe der Erfindung

Es ist Aufgabe der vorliegenden Erfindung, ein Verfahren zum Betrieb einer Wasserbehandlungsanlage vorzuschlagen, mit dem die Wasserbehandlungsanlage einerseits hygienisch und andererseits mit geringem Verbrauch an Regeneriermittellösung betrieben werden kann, während das Risiko eines Ausfalls der gewünschten Behandlungsfunktion (bspw. in Form eines Härtedurchbruchs bei einer Wasserenthärtungsanlage) minimiert wird.

### Kurze Beschreibung der Erfindung

Diese Aufgabe wird erfindungsgemäß durch ein Verfahren gemäß Anspruch 1 gelöst.

Erfindungsgemäß werden die Teilvolumenströme durch die verschiedenen Behälter jeweils separat gesteuert und im Normalbetrieb durch Variation der Ventilöffnungen auf vorgegebene Werte eingestellt, wobei sich die Werte für die Teilvolumenströme verschiedener Behälter zwischen zwei aufeinanderfolgenden Regenerationen zumindest zeitweise derart unterscheiden, dass die Restkapazitäten der Wasserbehandlungselemente für unterschiedliche Behälter den vorgegebenen Regenerationsgrenzwert zu unterschiedlichen Zeitpunkten unterschreiten.

Bei dem erfindungsgemäßen Verfahren handelt es sich um ein Parallelverfahren, d.h. die Behälter befinden sich erfindungsgemäß entweder im Normalbetrieb oder im Regenerationsbetrieb. Alle Behälter, die nicht regeneriert werden, werden also (Wasserentnahme vorausgesetzt) von Wasser durchströmt, wodurch eine verbesserte Hygiene gegenüber bekannten Pendelverfahren erreicht wird. Die Summe der Teilvolumenströme durch die einzelnen Behälter ergibt einen Gesamtvolumenstrom durch die Wasserbehandlungsanlage.

Gemäß der Erfindung kann jeder Behälter im Normalbetrieb unabhängig von den anderen betrieben werden. Eine separate Steuerung kann realisiert werden, indem für jeden Behälter ein separates Ventil oder eine separate Ventilanordnung zur Einstellung des Durchflusses an Rohwasser vorgesehen ist, wobei für die Steuerung der Ventile eine elektronische Steuereinheit vorgesehen ist. Die Teilvolumenströme durch die einzelnen Behälter sind also entsprechend der Ventilstellung der Ventile individuell einstellbar. Für eine dauerhaft genaue Volumenstromeinstellung ist es vorteilhaft, die Teilvolumenströme wiederholt zu messen und deren Werte an die Steuereinheit zu übermitteln, so dass bei Abweichungen von einem vorgegebenen Sollwert die Ventilstellungen nachgeregelt werden können (Regelkreis). Die Steuereinheit kann auch zur Steuerung der Regeneration dienen, wobei die Steuereinheit dann die Restkapazität eines jeden Behälters verfolgt und abhängig von der Restkapazität des jeweiligen Behälters dessen Regeneration auslöst.

Durch die erfindungsgemäße Festlegung unterschiedlicher Werte für die Teilvolumenströme durch die verschiedenen Behälter kann erreicht werden, dass die Wasserbehandlungselemente der unterschiedlichen Behälter unterschiedlich schnell erschöpft werden. Die Regenerationen der einzelnen Behälter können somit zeitlich entzerrt werden. Der Regenerationsbeginn kann somit für einen der Behälter zeitlich vorverlegt und für einen anderen Behälter zeitlich nach hinten verschoben werden. Je größer der Teilvolumenstrom in dem als nächstes zu regenerierenden Behälter ist und je kleiner die Teilvolumenströme durch die übrigen Behältern sind, desto mehr Restkapazität ist während der Regeneration verfügbar. Die Kapazität des als nächstes zu regenerierenden Behälters kann somit annähernd vollständig ausgeschöpft werden (kleiner Regenerationsgrenzwert), bis er vom Netz geht und regeneriert wird. Hierdurch kann Regenerationsmittel eingespart werden.

Die Wasserbehandlungselemente weisen jeweils eine Grundkapazität auf, die zur Verfügung steht, wenn das jeweilige Wasserbehandlungselement vollständig regeneriert ist. Die Grundkapazitäten der Wasserbehandlungselemente in den einzelnen Behältern sind bekannt und werden in der elektronischen Steuereinheit abgespeichert.

Ein Behälter kann mehrere Wasserbehandlungselemente beinhalten, z.B. in Form von mehreren Ionentauscherharzen. So können z.B. ein Kationen- und ein Anionenaustauschharz innerhalb eines einzigen Behälters vorgesehen sein (Mischbettfilter). Darüber hinaus besteht auch die Möglichkeit, dass Ionentauscher und Filterelemente oder verschiedene Filterelemente in einem Behälter integriert sind. Für die Bereitstellung der Regeneriermittellösung kann ein Vorratsgefäß vorgesehen sein.

### Bevorzugte Varianten des erfindungsgemäßen Verfahrens

Der Unterschied zwischen den Teilvolumenströmen wird vorzugsweise mindestens so groß gewählt, dass bei Erreichen des vorgegebenen Regenerationsgrenzwerts eines der Behälter die restlichen Behälter noch eine so hohe Restkapazität aufweisen, dass während der Dauer der Regeneration ein maximaler Volumenstrom mit behandeltem Wasser geliefert werden kann. Bei einer Wasserenthärtungsanlage wird dadurch sichergestellt, dass ein Härtedurchbruch während der Regeneration vermieden wird. Der maximale Gesamtvolumenstrom ist anlagenabhängig, wobei beim maximal möglichen Gesamtvolumenstrom ein Druckabfall von 100kPa festgestellt wird (Nenndurchfluss). Wenn die Wasserentnahme relativ sicher vorausgesagt werden kann, kann die Volumenstromdifferenz der Teilvolumenströme aber auch etwas geringer gewählt werden, derart, dass während der Dauer der Regeneration nicht der maximale Gesamtvolumenstrom, sondern lediglich der erwartete Gesamtvolumenstrom mit behandeltem Wasser geliefert werden kann. Dadurch kann der Druckverlust kleiner gehalten werden, der bei zu großen Durchflussunterschieden auftritt. Der erwartete Gesamtvolumenstrom kann mittels Messung der aktuellen Teilvolumenströme aller Behälters festgelegt werden, z.B. indem angenommen wird: erwarteter

Gesamtvolumenstrom = Summe der aktuellen Teilvolumenströme durch alle Behälter (wenn in naher Zukunft keine Änderungen erwartet werden) oder z.B. indem angenommen wird: erwarteter Gesamtvolumenstrom = Mittelwert der Summe der über einen gewissen Zeitraum gemessenen aktuellen Teilvolumenströme durch alle Behälter.

Die zu wählende Volumenstromdifferenz ist abhängig von der während der Regeneration benötigten Kapazität (also von der Dauer des Regenerationsvorgangs des als nächsten zu regenerierenden Behälters, der Rohwasserhärte, dem maximalen Gesamtvolumenstrom bzw. dem erwarteten Gesamtvolumenstrom), sowie von der aktuellen Restkapazitätsdifferenz der Behälter und von der Anzahl der Behälter. Die Restkapazitäten des Ionentauscherharzes der Behälter können aus der seit der letzten Regeneration durch den entsprechenden Behälter geflossenen Wassermenge und aus der Rohwasserhärte bestimmt werden. Die hierfür benötigte, seit der letzten Regeneration durch den Behälter geflossene Wassermenge wird vorzugsweise mittels eines Durchflussmessers ermittelt. Die Bestimmung der Rohwasserhärte des zu enthärteten Wassers kann mittels eines integrierten Leitfähigkeitssensors erfolgen, titrimetrisch bestimmt oder beim Wasserversorger erfragt und in der Steuereinheit hinterlegt werden. Bei einer anderen Variante kann die Restkapazität durch Messung der Leitfähigkeitsdifferenz des Ionentauschermaterials ermittelt werden. Die für die Ermittlung der Restkapazitäten erforderlichen Messungen können automatisch erfolgen und wiederholen sich, insbesondere erfolgen sie kontinuierlich.

Vorzugsweise wird jeder Behälter im Normalbetrieb mit einem Teilvolumenstrom an zu enthärtenden Wasser durchflossen, der einen vorgegebenen Minimalwert nicht unterschreitet. Der minimale Teilvolumenstrom ist abhängig vom Wasserzähler und entspricht vorzugsweise dem Anlaufwert des Wasserzählers (vorausgesetzt, dass mindestens ein Volumenstrom in dieser Höhe entnommen wird). Der Wert für den minimalen Teilvolumenstrom liegt in der Größenordnung eines zweistelligen Wertes (gemessen in m³/h), insbesondere bei 20-50 m³/h. Dadurch, dass alle Behälter, die sich nicht in der Regeneration befinden, zumindest mit einem minimalen Teilvolumenstrom an zu enthärtendem Wasser durchströmt werden, wird Stagnation vermieden, und ein hygienischer Betrieb sichergestellt.

Vorzugsweise ist das Verhältnis der Teilvolumenströme durch die einzelnen Behälter vorgegeben. Wenn bei einer Wasserenthärtungsanlage mit zwei Behältern beispielsweise 90% des Gesamtvolumenstromes durch den ersten Behälter fließen, während die restlichen 10% durch den zweiten Behälter fließen, so verfügt der am Netz bleibende zweite Behälter zum Regenerationszeitpunkt des ersten Behälters noch über etwa 90% seiner ursprünglichen Kapazität. Hohe Gesamtvolumenströme sind somit ohne Härtedurchbrüche auch in Phasen behandelbar, wenn ein Teil der Behälter regeneriert wird. Bei kurzer Regenerationsdauer und kleinem Gesamtvolumenstrom können auch schon kleinere Volumenstromunterschiede (bspw. 60:40 oder sogar 55:45) ausreichend sein. Je größer der Volumenstromunterschied, desto höher ist die während der Regeneration verfügbare Restkapazität. Es ist jedoch zu beachten, dass bei hohen Teilvolumenströmen der Druckverlust durch das Wasserbehandlungselement steigt und daher in diesem Fall eine kleinere Volumenstromdifferenz vorteilhaft sein kann.

Alternativ zur Festlegung des Verhältnisses der Teilvolumenströme kann auch ein quantitativer Wert für den Teilvolumenstrom eines Behälters vorgegeben werden (konkreter Durchflusswerte in m³/s). Der Teilvolumenstrom des anderen Behälters variiert dann entsprechend des Gesamtvolumenstroms.

Die Teilvolumenströme durch die einzelnen Behälter werden vorzugsweise so gedrosselt, dass sie unabhängig vom Wasser-Verteilersystem einem vorgegebenen Sollwert entsprechen. Um dies zu erreichen müssen bei der Einstellung der Ventile die hydraulischen Bedingungen des Verteilersystems berücksichtigt werden.

Bei einer besonders bevorzugten Variante des erfindungsgemäßen Verfahrens werden Behälter verwendet, die im Wesentlichen die gleiche Grundkapazität aufweisen. Unter "im Wesentlichen die gleiche Grundkapazität" sind erfindungsgemäß Kapazitäten zu verstehen, die sich nur durch die Toleranzen unterscheiden, die bei der Herstellung der Behälter und bei der Befüllung der Behälter mit dem Wasserbehandlungselement auftreten, unterscheiden. Diese Toleranzen belaufen sich auf bis zu ca. 10% der für die Herstellung/Befüllung angegebenen Sollkapazität.

Bei einer besonders bevorzugten Weiterbildung dieser Variante werden die Ventile so gesteuert, dass derjenige Behälter, der als letztes vom Regenerationsbetrieb in den Normalbetrieb gewechselt hat, den geringsten Teilvolumenstrom aufweist. Nach der Regeneration eines Behälters findet also eine Umkehr des Volumenstromverhältnisses statt: Der zuvor mit dem größeren Teilvolumenstrom durchflossene, gerade regenerierte Behälter wird nun mit dem kleineren Teilvolumenstrom durchflossen. Der zuletzt regenerierte Behälter wird durch den geringen Teilvolumenstrom im weiteren Verlauf nur wenig erschöpft und besitzt dann eine große Restkapazität, wenn die Regeneration des nächsten Behälters ansteht. Das Verhältnis der Teilvolumenströme wechselt also mit der Regeneration eines Behälters. Sind beispielsweise bei einer Wasserenthärtungsanlage mit zwei Behältern durch einen Behälter vor seiner Regeneration 90% des Gesamtvolumenstromes geflossen, so wird der Teilvolumenstrom durch diesen Behälter unmittelbar nach seiner Regeneration auf 10% des Gesamtvolumenstromes eingestellt. Durch Wechseln der Teilvolumenströme nach der Regeneration kann so im Falle von Behältern mit im Wesentlichen gleicher Grundkapazität auf einfache Weise sicher gestellt werden, dass jeweils der Behälter mit der niedrigsten Restkapazität mit dem größten Teilvolumenstrom durchflossen wird, so dass zum Zeitpunkt der nächsten Regeneration maximale Restkapazität der übrigen Behälter zur Verfügung steht, um einen Härtedurchbruch zu vermeiden. Die zuvor beschriebene Vorschrift (geringster Teilvolumenstrom durch den zuletzt regenerierten Behälter) wird vorzugsweise bis zu einem Zeitpunkt kurz vor der Erschöpfung eines Behälters befolgt. In der Endphase (Zeitpunkt kurz vor der Erschöpfung bis zur Regeneration) kann von dieser Vorschrift abgewichen werden, um in der Endphase einen Härteschlupf in dem fast erschöpften Behälter zu vermeiden (s.u.).

Um eine größtmögliche Restkapazität der im Normalbetrieb befindlichen Behälter während der Regeneration eines anderen Behälters auch bei unterschiedlich großen Grundkapazitäten der verschiedenen Behälter zu gewährleisten, werden vorzugsweise die Restkapazitäten der Wasserbehandlungselemente der Behälter ermittelt und es wird für den Behälter mit dem Wasserbehandlungselement mit der größten Restkapazität zumindest zeitweise der kleinste Teilvolumenstrom festgelegt.

Die während einer Regeneration zur Verfügung stehende Restkapazität kann weiter optimiert werden, wenn für den Behälter mit dem Wasserbehandlungselement mit der kleinsten Restkapazität zumindest zeitweise der größte Teilvolumenstrom festgelegt wird.

Wie bereits oben beschrieben müssen diese Vorschriften auch in diesem Fall nicht über die gesamte Betriebszeit erfüllt sein. Insbesondere kann es auch hier vorteilhaft sein, kurz vor Erschöpfung eines Behälters (Endphase) den Teilvolumenstrom durch den fast erschöpften Behälter zu drosseln.

Bei einer vorteilhaften Variante ist daher vorgesehen, dass der Teilvolumenstrom im Behälter gedrosselt wird, wenn die Restkapazität des Wasserbehandlungselements im entsprechenden Behälter unterhalb eines festgesetzten Härteschlupf-Grenzwertes sinkt. Der Härteschlupf-Grenzwert für die Restkapazität wird so gewählt, dass das Wasserbehandlungselement bei diesem Härteschlupf-Grenzwert fast erschöpft ist, z.B. bei einer Restkapazität in der Größenordnung von 20% der Grundkapazität. Bei einem fast erschöpften Wasserbehandlungselement kann somit die Ausnutzung der Restkapazität durch den geringeren Teilvolumenstrom optimiert werden (Reduzierung des Härteschlupfes). Der Durchsatz in zumindest einem weiteren Behälter muss dann entsprechend erhöht werden. Da es sich bei der "Endphase" um einen (verglichen mit der Betriebsdauer zwischen zwei aufeinanderfolgenden Regenerationen eines Behälters) relativ kurzen Zeitraum handelt (i.A. ca. 30 min), ist die Restkapazität des weiteren Behälters trotz der Erhöhung des Durchflusses im weiteren Behälter in der "Endphase" noch so groß, dass sie ausreicht, um einen Ausfall der gewünschten Behandlungsfunktion während des Regenerationsbetriebs des dann erschöpften Behälters zu vermeiden.

Vorzugsweise ist die Wasserbehandlungsanlage eine Wasserenthärtungsanlage und die Behälter enthalten ein Ionentauscherharz als Wasserbehandlungselement.

Die Wasserenthärtungsanlage umfasst ein Vorratsgefäß für eine Regeneriermittellösung zum Regenerieren des Ionentauscherharzes und eine Verschneideeinrichtung, mit der aus einem enthärteten Teilstrom und einem rohwasserführenden Teilstrom ein Verschnittwasserstrom gemischt werden kann. Als Regeneriermittellösung kommt dann eine konzentrierten Salzsole zur Anwendung, mit der das Ionentauscherharz beaufschlagt wird, wodurch die gebundenen Härtebildner verdrängt und durch Natrium-Ionen ersetzt werden. Nach der Regeneration steht wieder die volle Kapazität (Grundkapazität) bzw. die einem Sollregenerationsgrad entsprechenden Kapazität des Ionentauschers zur Verfügung.

Alternativ oder zusätzlich können Filter als Wasserbehandlungselemente vorgesehen sein. Die Regeneration erfolgt dann bspw. durch Rückspülen des entsprechenden Filters oder Behandeln mit einer Regeneriermittellösung.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Es zeigen:
- Fig. 1a-c: schematische Darstellungen zweier Behälter einer Wasserenthärtungsanlage sowie zugehörige Ventile zur Durchführung des erfindungsgemäßen Verfahrens mit einem Volumenstromverhältnis 5:95 vor der ersten Regeneration;
- Fig. 1d-f: schematische Darstellungen der Behälter sowie der zugehörigen Ventile aus Fig. 1a-c nach der ersten Regeneration; und
- Fig. 2: einen tabellarischen Verlauf der Volumenstromverhältnisse und der Restkapazitäten im Rahmen des erfindungsgemäßen Verfahrens mit einem Volumenstromverhältnis 30:70.

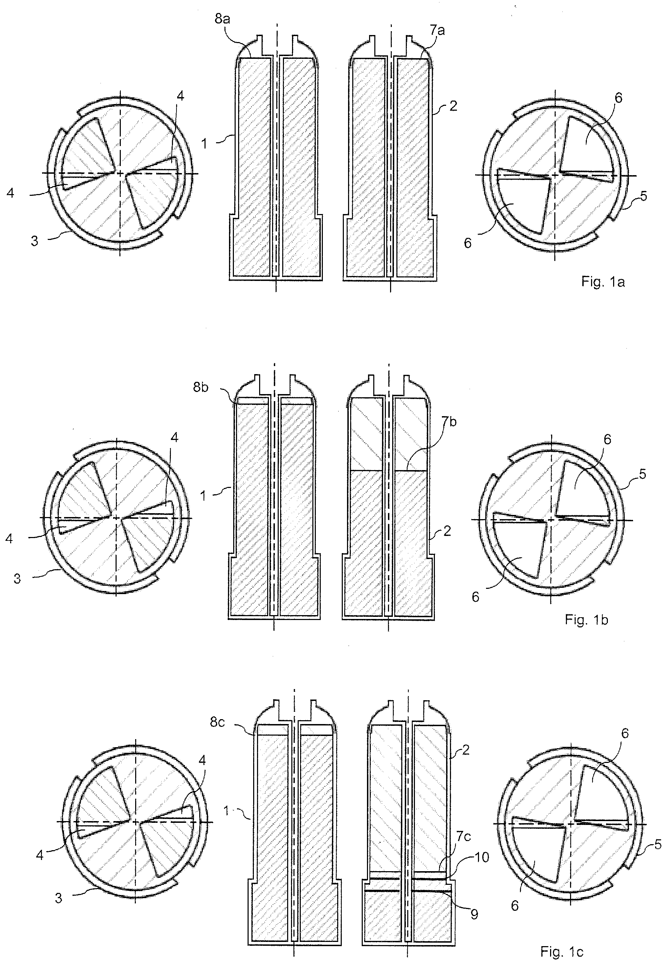

Das Prinzip des erfindungsgemäßen Verfahrens ist in **Fig. 1a****-f** anhand einer Wasserbehandlungsanlage mit zwei Behältern **1, 2**, die jeweils mit einem Teilvolumenstrom durchflossen werden, gezeigt. Für jeden Behälter 1, 2 ist ein unabhängig steuerbares Ventil **3, 5** vorgesehen. Mittels der Ventile 3, 5 wird das Verhältnis der Teilvolumenströme geregelt, indem die Größe von Ventilöffnungen **4, 4', 6, 6'** der Ventile 3, 5 variiert werden kann. Die Größe der Ventilöffnungen 4, 4', 6, 6' wird dazu entsprechend dem gewünschten Volumenstromverhältnis eingestellt. Die eng schraffierten Flächen in den Fig. 1a-f symbolisieren Restkapazitäten **7a, 7b, 7c, 7d, 7e, 7f, 8a, 8b, 8c, 8d, 8e, 8f** der in den Behältern 1, 2 enthaltenen Wasserbehandlungselementen. Um den Effekt des erfindungsgemäßen Verfahrens deutlich herauszustellen, ist in den Fig. 1a-f das erfindungsgemäße Verfahren beispielhaft mit einer sehr großen Volumenstromdifferenz gezeigt (Verhältnis der Teilvolumenströme ca. 95:5). Je nach Grundkapazitäten 7a, 8a und Größe des Gesamtvolumenstroms kann der Effekt jedoch auch mit erheblich kleineren Volumenstromdifferenzen erzielt werden.

Zu Beginn des Verfahrens sind beide Behälter 1, 2 frisch regeneriert (**Fig. 1a**); die Restkapazitäten 7a, 8a entsprechen daher den Grundkapazitäten der Behälter 1, 2. Das Ventil 3 des ersten Behälters 1 (links) weist nur eine kleine Ventilöffnungen 4 auf, so dass der Teilvolumenstrom (Durchfluss) durch den ersten Behälter 1 gering ist. Das Ventil 5 des zweiten Behälters 2 ist dagegen fast vollständig geöffnet. Der Teilvolumenstrom durch die Ventilöffnungen 6 und damit durch den zweiten Behälter 2 ist entsprechend groß.

Aufgrund des hohen Teilvolumenstroms durch den zweiten Behälter 2 nimmt dessen Restkapazität 7b schneller ab als die Restkapazität 8b des ersten Behälters 1, was in **Fig. 1b** dargestellt ist.

In **Fig. 1c** ist der zweite Behälter 2 fast erschöpft; er weist nur noch eine geringe Restkapazität 7c, nahe eines zuvor festgelegten Regenerationsgrenzwertes **9** auf und muss deshalb in Kürze regeneriert werden. Die Restkapazität 8c des ersten Behälters 1 hat dagegen aufgrund des geringen Teilvolumenstroms durch den ersten Behälter 1 nur geringfügig abgenommen. Wird nun der zweite Behälter 2 vom Netz genommen und regeneriert, so wird der Gesamtvolumenstrom (Summe der Teilvolumenströme der beiden Behälter) während dieser Zeit über den ersten Behälter 1 geleitet und behandelt. Da der erste Behälter 1 zu diesem Zeitpunkt noch eine große Restkapazität 8c aufweist, kann selbst bei hohem Gesamtvolumenstrom während der Regeneration des zweiten Behälters 2 ein Ausfall der gewünschten Behandlungsfunktion ausgeschlossen werden.

Die Volumenstromdifferenz ist so abgestimmt, das bei Erreichen des Regenerationsgrenzwertes 9 die Differenz der Restkapazitäten der Behälter 1, 2 größer oder gleich der während der Regeneration des ersten Behälters 1 benötigten Kapazität zur Behandlung des Gesamtvolumenstroms ist, wobei die Differenz der Restkapazitäten der Behälter 1, 2 neben der Volumenstromdifferenz abhängig ist von der Durchflussdauer, der Wasserhärte und der Behälteranzahl, und wobei die während der Regeneration benötigte Kapazität abhängig ist vom Gesamtvolumenstrom, der Regenerationsdauer und der Wasserhärte.

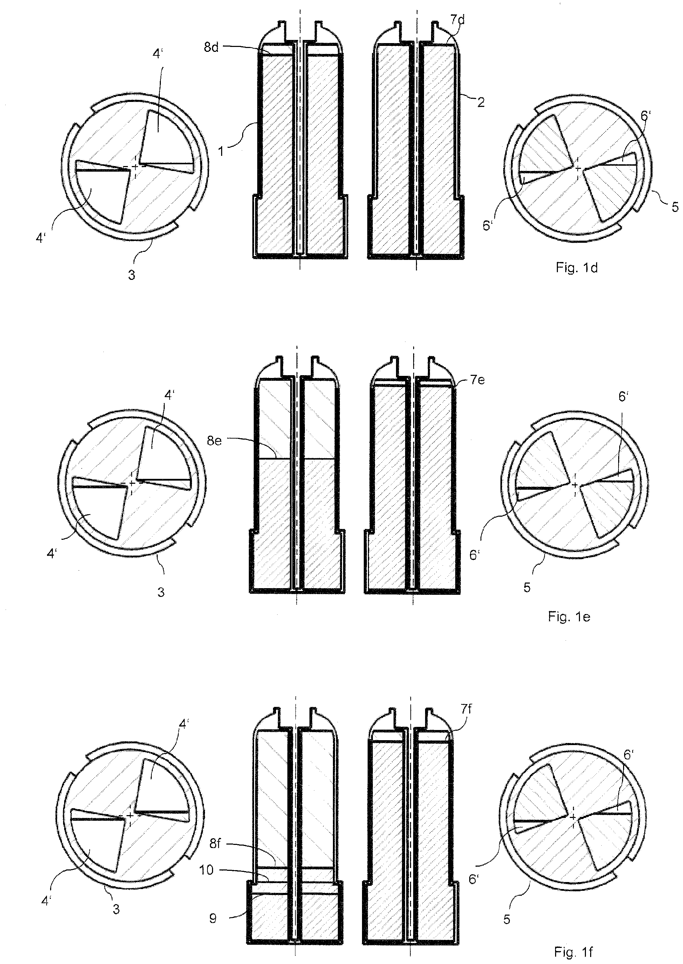

**Fig. 1d** zeigt die beiden Behälter 1, 2 direkt nach der Regeneration des zweiten Behälters 2. Zu diesem Zeitpunkt steht dessen volle Grundkapazität als Restkapazität 7d zur Verfügung. Die Restkapazität 8d des ersten Behälters 1 hat inzwischen nur wenig abgenommen, weil der Durchfluss durch den Behälter 1 bis zur Regeneration von Behälter 2 gering war. Nun werden die Durchflüsse gewechselt. Das Ventil 3 des ersten Behälters 1 ist nun fast vollständig geöffnet. Der Teilvolumenstrom durch die Ventilöffnungen 4' und damit durch den ersten Behälter 1 ist entsprechend groß. Dagegen weist das Ventil 5 des zweiten Behälters 2 jetzt nur kleine Öffnungen 6' auf, sodass der Durchfluss durch den Behälter 2 gering ist. Vorzugsweise entspricht die Ventilöffnung 6' des Ventils 5 des zweiten Behälters 2 nach der Regenration des zweiten Behälters 2 der Ventilöffnung 4 des Ventils 3 des ersten Behälters 1 vor der Regeneration des zweiten Behälters 2. Es ist jedoch auch möglich, ein davon abweichendes Volumenstromverhältnis/Ventilöffnungsverhältnis zu wählen, solange sichergestellt ist, dass der Behälter mit der kleineren Restkapazität (hier: erster Behälter 1) zuerst erschöpft wird.

Aufgrund des höheren Teilvolumenstroms durch den Behälter 1 nimmt dessen (ohnehin schon kleinere) Restkapazität 8e schneller ab als die Restkapazität 7e des ersten Behälters 2 (**Fig. 1e**).

In **Fig. 1f** ist der Behälter 1 fast erschöpft (Restkapazität 8f nahe dem Regenerationsgrenzwert 9) und muss in Kürze regeneriert werden. Dagegen hat die Restkapazität 7f des zweiten Behälters 2 aufgrund des geringen Teilvolumenstroms nur geringfügig abgenommen. Während der Regeneration des ersten Behälters 1 fließt der Gesamtvolumenstrom des zu behandelnden Wassers ausschließlich durch den zweiten Behälter 2. Aufgrund der hohen Restkapazität 7f des zweiten Behälters 2 können während der Regerationsphase des ersten Behälters 1 auch große Wassermengen (maximaler Gesamtvolumenstrom) behandelt werden. Nach der Regeneration des zweiten Behälters 2 wird das Verhältnis der Teilvolumenströme wieder umgekehrt.

Wären beide Behälter gleichmäßig durchströmt worden (wie es aus dem Stand der Technik bekannt ist), so hätten deren Kapazitäten auch gleichmäßig abgenommen. Wird in diesem Fall ein Behälter zur Regeneration vom Netz genommen, wenn er annähernd erschöpft ist, so ist der andere in Betriebsstellung verbleibende Behälter ebenfalls annähernd erschöpft. Bei hohen Volumenströmen besteht dann die Gefahr, dass die Kapazität des in Betriebsstellung befindlichen Behälters nicht mehr ausreicht; es kommt zum Härtedurchbruch. Um dies zu vermeiden, müsste ein Behälter früher vom Netz genommen und regeneriert werden, was aber mit einem erhöhten Verbrauch an Regeneriermittellösung verbunden wäre.

Die erfindungsgemäße unterschiedliche Durchströmung der beiden Behälter 1, 2 vermeidet einerseits, dass es zur einem Ausfall der gewünschten Behandlungsfunktion während der Regeneration kommt, andererseits kann der einzelne Behälter bis zum Beginn seiner Regeneration stärker erschöpft werden, was den Verbrauch an Regeneriermittellösung verringert.

Die erfindungsgemäße individuelle Steuerung der Teilvolumenströme durch die einzelnen Behälter 1, 2 ermöglicht außerdem den Durchfluss durch einen Behälter kurz vor seiner Erschöpfung (unterhalb eines festgelegten Grenzwertes **10**, der eine Endphase mit erhöhter Härteschlupfgefahr einleitet) zu drosseln. Damit kann die Ausnutzung der Restkapazität weiter optimiert werden.

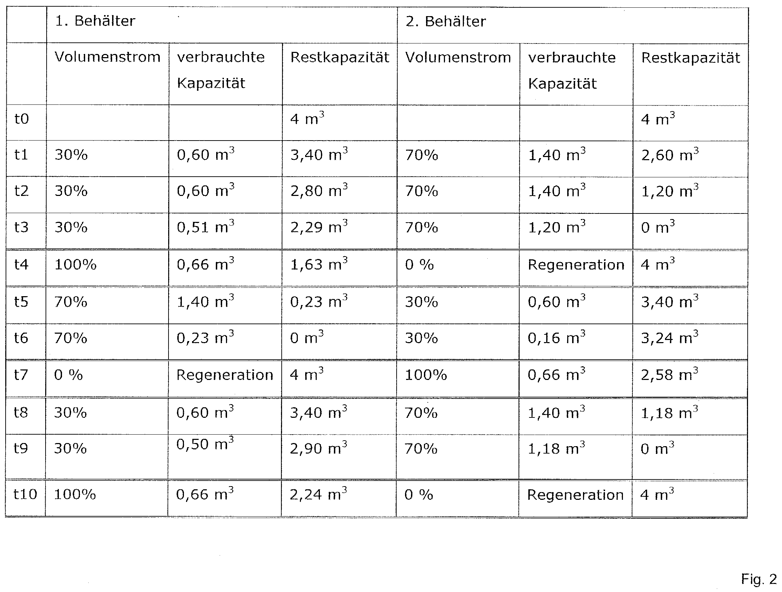

**Fig. 2** zeigt eine tabellarische Aufstellung der Verteilung der Volumenströme, und der Restkapazitäten zweier Behälter zu verschiedenen Zeitpunkten t0, t1, t2, t3, t4, t5, t6, t7, t8, t9, t10 und der zwischen diesen Zeitpunkten t0, t1, t2, t3, t4, t5, t6, t7, t8, t9, t10 verbrauchten Kapazität der beiden Behälter. Für das gezeigte Beispiel wird ein konstanter Gesamtdurchfluss von 2 m³/h vorgegeben. Das erfindungsgemäße Verfahren kann aber auch mit variierenden Gesamtdurchflüssen angewendet werden. Die Behälter weisen beide jeweils eine Grundkapazität von 4 m³ auf. Die Zeit, die benötigt wird, um einen der Behälter zu regenerieren (Regenerationsdauer) wird hier mit 20 Minuten angenommen. Zum Zeitpunkt t0 steht in beiden Behältern die Grundkapazität zur Verfügung. Die Volumenströme sind im Verhältnis 30:70 aufgeteilt (Teilvolumenstrom durch ersten Behälter 0,6 m³/h, Teilvolumenstrom durch zweiten Behälter 1,4 m³/h). Entsprechend dem Verhältnis der Teilvolumenströme sinkt die Restkapazität in den beiden Behältern unterschiedlich schnell. Zum Zeitpunkt t3 ist der zweite Behälter vollständig erschöpft, während im ersten Behälter noch mehr als die Hälfte seiner Grundkapazität zur Verfügung steht. Diese zum Zeitpunkt t3 vorhandene Restkapazität (2,29 m³) des ersten Behälters reicht aus, um den Gesamtvolumenstrom (100% = 2 m³/h) zu behandeln (z.B. zu enthärten), da für die Behandlung des Gesamtvolumenstroms während der Regenerationsdauer im vorliegenden Beispiel lediglich eine Kapazität von 0,66 m³ benötigt wird. Nach der Regeneration weist der erste Behälter eine geringere Restkapazität auf als der zweite Behälter. Das anfängliche Volumenstromverhältnis wird getauscht, so dass nun der erste Behälter mit einem Teilvolumenstrom von 70% durchflossen wird und die Restkapazität des ersten Behälters schneller sinkt als die des zweiten Behälters.

Durch die unterschiedlich starke Durchströmung der einzelnen Behälter können bei Wasserenthärtungsanlagen Härtedurchbrüche während der Regeneration vermieden und der Verbrauch an Regeneriermittellösung optimiert werden. Gleichzeitig ist sichergestellt, dass sämtliche Behälter gleichzeitig durchströmt werden und damit Stagnation vermieden wird, was aus hygienischen Gründen wünschenswert ist

### Bezugszeichenliste

- 1: erster Behälter
- 2: zweiter Behälter
- 3: Ventil für den ersten Behälter
- 4: Ventilöffnung des Ventils für den ersten Behälter
- 5: Ventil für den zweiten Behälter
- 6: Ventilöffnung des Ventils für den zweiten Behälter
- 7: aktuelle Restkapazität des Wasserbehandlungselements des zweiten Behälters
- 8: aktuelle Restkapazität des Wasserbehandlungselements des ersten Behälters
- 9: Regenerationsgrenzwert
- 10: Härteschlupf-Grenzwert

## Patentansprüche

1. Verfahren zum Betrieb einer Wasserbehandlungsanlage mit mehreren parallel betreibbaren, mit je einem Wasserbehandlungselement einer Grundkapazität bestückten Behältern (1, 2) und mit Ventilen (3, 5) mit Ventilöffnungen zur Einstellung von Teilvolumenströmen von zu behandelndem Wasser durch die Behälter (1, 2),
wobei sich jeder Behälter (1, 2) entweder in einem Normalbetrieb oder in einem Regenerationsbetrieb befindet,
wobei im Normalbetrieb eines Behälters (1, 2) das zugehörige Ventil (3, 5) zumindest teilweise geöffnet ist und das Wasserbehandlungselement des Behälters eine Restkapazität (7a, 7b, 7c, 7d, 7e, 7f, 8a, 8b, 8c, 8d, 8e, 8f) aufweist,
wobei im Regenerationsbetrieb das Ventil (3, 5) geschlossen ist und der Behälter (1, 2) mit einer Regeneriermittellösung durchströmt wird,
wobei sich immer mindestens einer der Behälter (1, 2) im Normalbetrieb befindet, und
wobei ein Regeneriervorgang des Wasserbehandlungselements eingeleitet wird, wenn die Restkapazität dieses Wasserbehandlungselements einen vorgegebenen Regenerationsgrenzwert (9) unterschreitet,
**dadurch gekennzeichnet,**
**dass** die Teilvolumenströme durch die verschiedenen Behälter (1, 2) jeweils separat gesteuert und im Normalbetrieb durch Variation der Ventilöffnungen auf vorgegebene Werte eingestellt werden, wobei sich die Werte für die Teilvolumenströme verschiedener Behälter (1, 2) zwischen zwei aufeinanderfolgenden Regenerationen zumindest zeitweise derart unterscheiden, dass die Restkapazitäten der Wasserbehandlungselemente für unterschiedliche Behälter (1, 2) den vorgegebenen Regenerationsgrenzwert (9) zu unterschiedlichen Zeitpunkten unterschreiten.

2. Verfahren nach Anspruch 1, **dadurch gekennzeichnet, dass** der Unterschied zwischen den Teilvolumenströmen mindestens so groß gewählt wird, dass bei Erreichen des vorgegebenen Regenerationsgrenzwerts (9) eines der Behälter (1) die restlichen Behälter (2) noch eine so hohe Restkapazität aufweisen, dass während der Dauer der Regeneration ein maximaler Volumenstrom mit behandeltem Wasser geliefert werden kann.

3. Verfahren nach Anspruch 1 oder 2, **dadurch gekennzeichnet, dass** jeder Behälter (1, 2) im Normalbetrieb mit einem Teilvolumenstrom an zu enthärtenden Wasser durchflossen wird, der einen vorgegebenen Minimalwert nicht unterschreitet.

4. Verfahren nach einem der vorherigen Ansprüche, **dadurch gekennzeichnet, dass** das Verhältnis der Teilvolumenströme durch die einzelnen Behälter (1, 2) vorgegeben ist.

5. Verfahren nach einem der vorhergehenden Ansprüche, **dadurch gekennzeichnet, dass** Behälter (1, 2) verwendet werden, die im Wesentlichen die gleiche Grundkapazität aufweisen.

6. Verfahren nach Anspruch 5, **dadurch gekennzeichnet, dass** die Ventile (3, 5) so gesteuert werden, dass derjenige Behälter (1, 2), der als letztes vom Regenerationsbetrieb in den Normalbetrieb gewechselt hat, den geringsten Teilvolumenstrom aufweist.

7. Verfahren nach einem der vorhergehenden Ansprüche, **dadurch gekennzeichnet, dass** die Restkapazitäten (7a, 7b, 7c, 7d, 7e, 7f, 8a, 8b, 8c, 8d, 8e, 8f) der Wasserbehandlungselemente der Behälter (1, 2) ermittelt werden und für den Behälter (1, 2) mit dem Wasserbehandlungselement mit der größten Restkapazität (7d, 7e, 7f, 8a, 8b, 8c) zumindest zeitweise der kleinste Teilvolumenstrom festgelegt wird.

8. Verfahren nach Anspruch 7, **dadurch gekennzeichnet, dass** für den Behälter mit dem Wasserbehandlungselement mit der kleinsten Restkapazität (7a, 7b, 7c, 8d, 8e, 8f) zumindest zeitweise der größte Teilvolumenstrom festgelegt wird.

9. Verfahren nach einem der vorherigen Ansprüche, **dadurch gekennzeichnet, dass** der Teilvolumenstrom im Behälter gedrosselt wird, wenn die Restkapazität des Wasserbehandlungselements im entsprechenden Behälter (1, 2) unterhalb eines festgesetzten Grenzwertes (10) sinkt.

10. Verfahren nach einem der vorhergehenden Ansprüche, **dadurch gekennzeichnet, dass** die Wasserbehandlungsanlage eine Wasserenthärtungsanlage ist und die Behälter (1, 2) ein Ionentauscherharz als Wasserbehandlungselement enthalten.

## Claims

1. Method for operating a water treatment system with a plurality of containers (1, 2) which can be operated in parallel and are each provided with one water treatment element of a basic capacity, and with valves (3, 5) comprising valve openings for adjusting partial volume flows of water to be treated through the containers (1, 2),
wherein each container (1, 2) is either in normal operation or in regeneration operation,
wherein in normal operation of a container (1, 2) the associated valve (3, 5) is at least partially opened and the water treatment element of the container has a residual capacity (7a, 7b, 7c, 7d, 7e, 7f, 8a, 8b, 8c, 8d, 8e, 8f),
wherein in regeneration operation the valve (3, 5) is closed and a regeneration agent solution flows through the container (1, 2),
wherein at any time at least one of the containers (1, 2) is in normal operation, and
wherein a regeneration process of the water treatment element is initiated when the residual capacity of this water treatment element falls below a predetermined regeneration limit value (9),
**characterized in that**
the partial volume flows through the different containers (1, 2) are controlled separately in each case and are adjusted to predetermined values in normal operation through variation of the valve openings, wherein the values for the partial volume
flows of different containers (1, 2) differ between two successive regenerations at least temporarily such that the residual capacities of the water treatment elements for different containers (1, 2) fall below the predetermined regeneration limit value (9) at different points in time.

2. Method according to claim 1, **characterized in that** the difference between the partial volume flows is selected to be at least sufficiently large such that when the predetermined regeneration limit value (9) of one of the containers (1) is reached, the remaining containers (2) still have a sufficiently high residual capacity such that a maximum volume flow with treated water can be supplied throughout the duration of regeneration.

3. Method according to claim 1 or 2, **characterized in that** a partial volume of water to be softened, which does not fall below a predetermined minimum value, flows through each container (1, 2) during normal operation.

4. Method according to any one of the preceding claims, **characterized in that** the ratio of the partial volume flows through the individual containers (1, 2) is preset.

5. Method according to any one of the preceding claims, **characterized in that** containers (1, 2) are used which have substantially the same basic capacity.

6. Method according to claim 5, **characterized in that** the valves (3, 5) are controlled such that the container (1, 2) that was the last to change from regeneration operation into normal operation has the smallest partial volume flow.

7. Method according to any one of the preceding claims, **characterized in that** the residual capacities (7a, 7b, 7c, 7d, 7e, 7f, 8a, 8b, 8c, 8d, 8e, 8f) of the water treatment elements of the containers (1, 2) are determined and the smallest partial volume flow is set at least at times for the container (1, 2) having the water treatment element with the largest residual capacity (7d, 7e, 7f, 8a, 8b, 8c).

8. Method according to claim 7, **characterized in that** the largest partial volume flow is set at least at times for the container having the water treatment element with the smallest residual capacity (7a, 7b, 7c, 8d, 8e, 8f).

9. Method according to any one of the preceding claims, **characterized in that** the partial volume flow in the container is throttled when the residual capacity of the water treatment element in the corresponding container (1, 2) drops below a fixed limit value (10).

10. Method according to any one of the preceding claims, **characterized in that** the water treatment system is a water softening system and the containers (1, 2) contain an ion exchanger resin as water treatment element.

## Revendications

1. Procédé permettant de faire fonctionner une installation de traitement d'eau comprenant plusieurs réservoirs (1, 2) fonctionnant en parallèle et équipés chacun d'un élément de traitement d'eau d'une capacité de base, et comprenant des vannes (3, 5) avec des ouvertures de vanne pour régler les flux volumiques partiels d'eau à traiter à travers les réservoirs (1, 2),
selon lequel chaque réservoir (1, 2) se trouve soit dans un mode normal, soit dans un mode de régénération,
selon lequel, lorsqu'un réservoir (1, 2) est en mode normal, la vanne (3, 5) associée est au moins partiellement ouverte et l'élément de traitement d'eau du réservoir présente une capacité résiduelle (7a, 7b, 7c, 7d, 7e, 7f, 8a, 8b, 8c, 8d, 8e, 8f),
selon lequel, en mode de régénération, la vanne (3, 5) est fermée et le réservoir (1, 2) est traversé par une solution d'agent régénérant,
selon lequel toujours au moins un des réservoirs (1, 2) se trouve en mode normal,
selon lequel un processus de régénération de l'élément de traitement d'eau est déclenché si la capacité résiduelle de cet élément de traitement d'eau devient inférieure à une valeur limite de régénération (9) prédéfinie,
**caractérisé en ce**
**que** les flux volumiques partiels à travers les différents réservoirs (1, 2) sont chacun commandés séparément et, en mode normal, réglés à des valeurs prédéfinies par variation des ouvertures de vanne, lesdites valeurs des flux volumiques partiels des différents réservoirs (1, 2) étant au moins temporairement différentes entre deux régénérations successives, de telle sorte que les capacités résiduelles des éléments de traitement d'eau de réservoirs (1, 2) différents deviennent inférieures à la valeur limite de régénération (9) prédéfinie à des instants différents.

2. Procédé selon la revendication 1, **caractérisé en ce que** la différence entre les flux volumiques partiels est choisie au moins assez grande pour que, lorsqu'un des réservoirs (1) atteint la valeur limite de régénération (9) prédéfinie, les réservoirs restants (2) présentent encore une capacité résiduelle assez élevée pour qu'un flux volumique maximal d'eau traitée puisse être fourni pendant la durée de la régénération.

3. Procédé selon la revendication 1 ou 2, **caractérisé en ce qu'**en mode normal, chaque réservoir (1, 2) est traversé par un flux volumique partiel d'eau à adoucir qui n'est pas inférieur à une valeur minimale prédéfinie.

4. Procédé selon l'une des revendications précédentes, **caractérisé en ce que** le rapport des flux volumiques partiels à travers les différents réservoirs (1, 2) est prédéfini.

5. Procédé selon l'une des revendications précédentes, **caractérisé en ce que** l'on utilise des réservoirs (1, 2) qui présentent sensiblement la même capacité de base.

6. Procédé selon la revendication 5, **caractérisé en ce que** les vannes (3, 5) sont commandées de telle sorte que le réservoir (1, 2) qui est passé en dernier du mode de régénération en mode normal présente le flux volumique partiel le plus faible.

7. Procédé selon l'une des revendications précédentes, **caractérisé en ce que** les capacités résiduelles (7a, 7b, 7c, 7d, 7e, 7f, 8a, 8b, 8c, 8d, 8e, 8f) des éléments de traitement d'eau des réservoirs (1, 2) sont déterminées et le plus petit flux volumique partiel est défini au moins temporairement pour le réservoir (1, 2) équipé de l'élément de traitement d'eau ayant la plus grande capacité résiduelle (7d, 7e, 7f, 8a, 8b, 8c).

8. Procédé selon la revendication 7, **caractérisé en ce que** le plus grand flux volumique partiel est défini au moins temporairement pour le réservoir équipé de l'élément de traitement d'eau ayant la plus petite capacité résiduelle (7a, 7b, 7c, 8d, 8e, 8f).

9. Procédé selon l'une des revendications précédentes, **caractérisé en ce que** le flux volumique partiel dans le réservoir est réduit lorsque la capacité résiduelle de l'élément de traitement d'eau dans le réservoir (1, 2) correspondant baisse en dessous d'une valeur limite fixée (10).

10. Procédé selon l'une des revendications précédentes, **caractérisé en ce que** l'installation de traitement d'eau est une installation d'adoucissement d'eau et les réservoirs (1, 2) contiennent une résine échangeuse d'ions comme élément de traitement d'eau.
